# EUROPÄISCHE PATENTSCHRIFT

(11) **EP 2 633 193 B1**
(45) Veröffentlichungstag und Bekanntmachung des Hinweises auf die Patenterteilung: **25.06.2014**
(21) Anmeldenummer: 11754675.4
(22) Anmeldetag: 09.09.2011
(51) Int. Cl.: F04B 1/04, F02M 59/44

(54) **PUMPE, INSBESONDERE KRAFTSTOFFHOCHDRUCKPUMPE**
PUMP, IN PARTICULAR HIGH-PRESSURE FUEL PUMP
POMPE, EN PARTICULIER POMPE À CARBURANT HAUTE PRESSION

(30) Priorität: 25.10.2010 DE 102010042856
(43) Veröffentlichungstag der Anmeldung: 04.09.2013
(73) Patentinhaber: Robert Bosch GmbH, 70442 Stuttgart (DE)
(72) Erfinder: CAKIRLI, Ekrem, 77694 Kehl (DE); MUELLERS, Johannes, 70372 Stuttgart (DE)
(86) Internationale Anmeldenummer: PCT/EP2011/065667
(87) Internationale Veröffentlichungsnummer: WO 2012/055629

(56) Entgegenhaltungen:
- DE-A1-102006 051 332
- US-A1- 2003 108 443

## Beschreibung

Die Erfindung betrifft eine Pumpe, insbesondere eine Kraftstoffhochdruckpumpe gemäß dem Oberbegriff des Anspruchs 1.

### Stand der Technik

Eine solche Pumpe ist durch die DE 10 2006 051332 A1 bekannt. Diese Pumpe ist eine Kraftstoffhochdruckpumpe, die dazu dient Kraftstoff in ein sogenanntes Common-Rail-Kraftstoffeinspritzsystem einer Brennkraftmaschine zu fördern. Die Pumpe weist ein Gehäuse mit einer in diesem aufgenommenen Antriebswelle auf, die mittels zweier Gleitlageranordnungen drehbar gelagert ist. Durch die Antriebswelle wird wenigstens ein Pumpenkolben der Kraftstoffhochdruckpumpe zumindest mittelbar angetrieben. Die Antriebswelle weist einen Antriebsbereich auf, in dem diese angetrieben wird, beispielsweise durch die Brennkraftmaschine. Die Gleitlageranordnung umfasst eine Lagerbohrung und einen sich durch diese hindurch erstreckende Lagerwellenabschnitt der Antriebswelle. Die Gleitlageranordnung umfasst je eine Lagerbuchse, in welcher die Lagerbohrung ausgebildet ist. Die Gleitlageranordnung weist eine sich in radialer Richtung bezüglich der Drehachse der Antriebswelle zwischen dem Lagerabschnitt der Antriebswelle und der Lagerbohrung erstreckende Lagerluft auf, wobei die Lagerluft in einem zwischen den Lagerrändern liegenden Zwischenbereich einen kleineren Wert aufweist als an den Lagerrändern. Der Zwischenbereich ist dabei in der Lagermitte angeordnet und die Gleitlageranordnung ist somit symmetrisch ausgebildet. Der Antriebsbereich der Antriebswelle ist in Richtung ihrer Drehachse zur Gleitlageranordnung versetzt angeordnet, so dass sich mit der bekannten symmetrischen Ausbildung keine optimale Belastungsverteilung in der Gleitlageranordnung ergibt.

### Offenbarung der Erfindung

### Vorteile der Erfindung

Die erfindungsgemäße Pumpe mit den Merkmalen des Anspruchs 1 hat den Vorteil, dass eine verbesserte Belastungsverteilung in der Gleitlageranordnung erreicht ist.
Vorteilhafte Ausgestaltungen und Weiterbildungen der Erfindung sind in den abhängigen Ansprüchen angegeben.

Weitere, die Erfindung verbessernde Maßnahmen werden nachstehend gemeinsam mit der Beschreibung eines bevorzugten Ausführungsbeispiels der Erfindung anhand der Figuren näher dargestellt.

### Zeichnung

Es zeigen:
- Figur 1: eine quergeschnittene Seitenansicht einer beispielhaft mit einem Nockentrieb ausgebildeten Kraftstoffhochdruckpumpe, welche eine Antriebswelle umfasst, die in zwei Gleitlageranordnungen drehbar aufgenommen ist;
- Figur 2: ein erstes Ausführungsbeispiel einer Gleitlageranordnung für eine Pumpe gemäß der vorliegenden Erfindung;
- Figur 3: ein zweites Ausführungsbeispiel einer Gleitlageranordnung für eine Pumpe gemäß der vorliegenden Erfindung; und
- Figur 4: ein drittes Ausführungsbeispiel einer Gleitlagerariordnung für eine Pumpe gemäß der vorliegenden Erfindung; und
- Figur 5: ein viertes Ausführungsbeispiel einer Gleitlageranordnung für eine Pumpe gemäß der vorliegenden Erfindung.

### Beschreibung der Ausführungsbeispiele

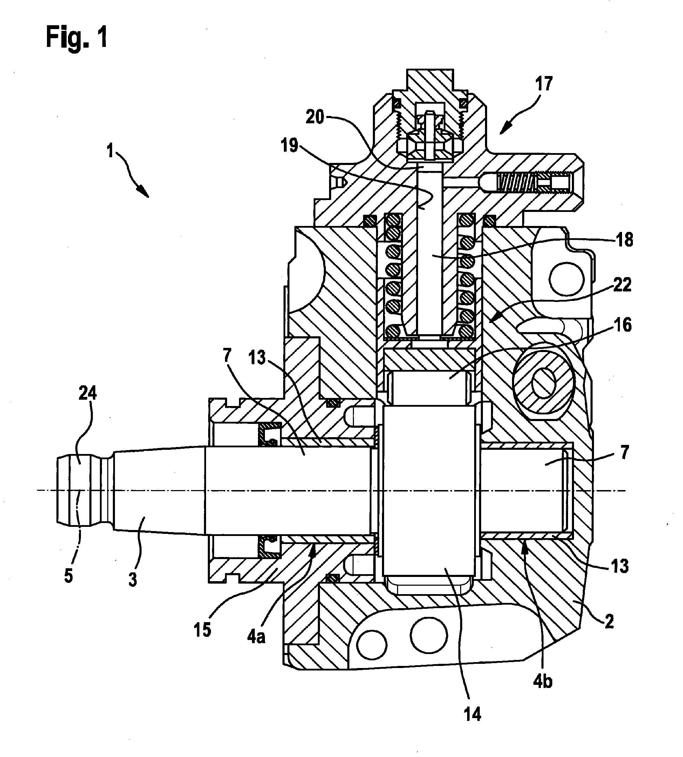

Die Figur 1 zeigt eine Pumpe 1 in einer quergeschnittenen Seitenansicht. Die Pumpe ist eine Kraftstoffhochdruckpumpe und dient zur Förderung von Kraftstoff in einen Hochdruckspeicher einer Kraftstoffeinspritzeinrichtung einer Brennkraftmaschine. Die Pumpe 1 umfasst ein Gehäuse 2, in welchem eine Antriebswelle 3 drehbar gelagert aufgenommen ist. Die Antriebswelle 3 erstreckt sich entlang einer Antriebswellenachse 5, und ist in zwei Gleitlageranordnungen 4a und 4b gelagert. Die Gleitlageranordnung 4a ist in einem Lagerflansch 15 aufgenommen, wohingegen die Gleitlageranordnung 4b unmittelbar im Gehäuse 2 eingebracht ist. Die Gleitlageranordnungen 4a und 4b werden jeweils durch eine Lagerbuchse 13 gebildet, welche die Antriebswelle 3 über Lagerwellenabschnitte 7 aufnimmt. Zwischen den beiden Gleitlageranordnungen 4a und 4b umfasst die Antriebswelle 3 einen Nockenabschnitt 14. Auf dem Nockenabschnitt 14 läuft eine Rolle 16 ab, wobei durch die Rotation der Antriebswelle 3 eine Hubbewegung in einem Pumpenelement 17 erzeugt wird. Das Pumpenelement 17 umfasst einen Pumpenkolben 18, der in einer Zylinderbohrung 19 dicht geführt ist und in dieser mit seiner der Antriebswelle 3 abgewandten Stirnseite einen Pumpenarbeitsraum 20 begrenzt. Die Rolle 16 ist Teil eines Rollenstößels 22 über den die Drehbewegung der Antriebswelle 3 in eine Hubbewegung des Pumpenkolbens 18 umgesetzt wird. Auftretende Kräfte werden dabei vorzugsweise über die Rolle 16 in den Nockenabschnitt 14 eingeleitet, welche durch die benachbarten Gleitlageranordnungen 4a und 4b aufgenommen werden. Ferner werden Kräfte über den aus dem Gehäuse 2 herausragenden Bereich 24 der Antriebswelle 3 eingeleitet werden, wobei diese Kräfte hauptsächlich durch die Gleitlageranordnung 4a aufgenommen werden. Der aus dem Gehäuse 2 ragende Bereich 24 bildet einen Antriebsbereich der Antriebswelle 3, über den die erforderliche Antriebskraft bzw. das erforderliche Antriebsdrehmoment auf die Antriebswelle 3 aufgebracht wird. Der Antriebsbereich 24 der Antriebswelle 3 ist beispielsweise über ein Getriebe oder einen Riemen mit einer Welle der Brennkraftmaschine verbunden und wird durch diese angetrieben. Durch den Antrieb wirkt auf den Antriebsbereich 24 der Antriebswelle 3 eine Kraft in radialer Richtung bezüglich der Drehachse 5 der Antriebswelle 3, die insbesondere durch die Gleitlageranordnung 4a aufgenommen werden muss.

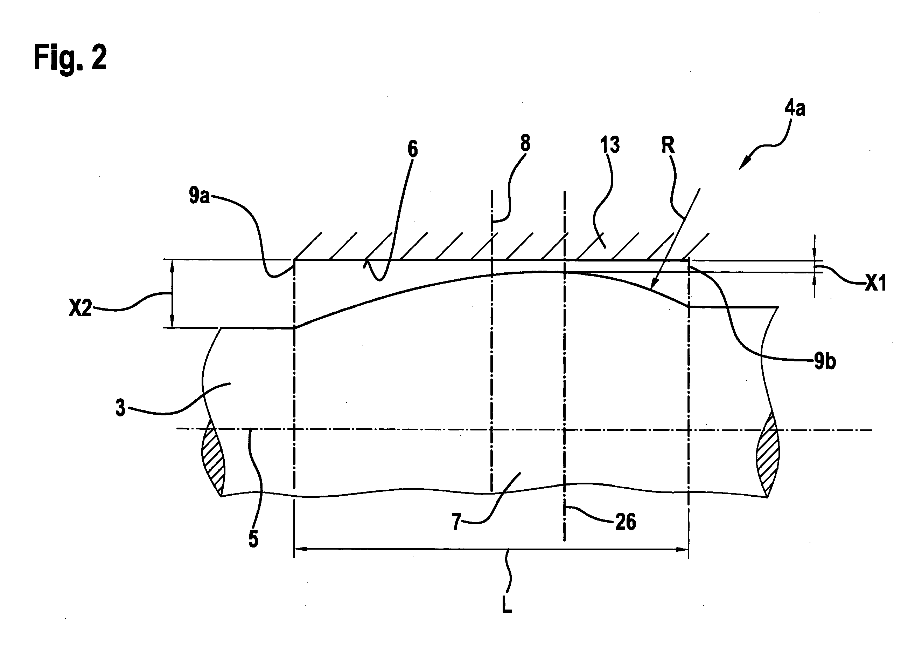

Die Figur 2 zeigt ein erstes Ausführungsbeispiel einer geometrischen Ausgestaltung einer Gleitlageranordnung 4a gemäß der vorliegenden Erfindung. Dargestellt ist die Antriebswelle 3, welche sich durch die Lagerbuchse 13 hindurch erstreckt. Der die Gleitlageranordnung 4a bildende Bereich der Antriebswelle 3 ist durch den Lagerwellenabschnitt 7 gebildet. Dieser erstreckt sich durch die Lagerbohrung 6 in der Lagerbuchse 13. Zwischen dem Lagerwellenabschnitt 7 und der Lagerbohrung 6 ist in radialer Richtung bezüglich der Drehachse 5 der Antriebswelle 3 eine Lagerluft X vorhanden. Als Lagerluft X ist der radiale Abstand zwischen dem Lagerwellenabschnitt 7 und der Lagerbohrung 6 bezeichnet. Bei mittiger Anordnung des Lagerwellenabschnitts 7 in der Lagerbohrung 6, das heißt wenn die Längsachse 5 des Lagerwellenabschnitts 7 mit der Längsachse der Lagerbohrung 6 zusammenfällt, entspricht die Lagerluft X dem halben radialen Spiel zwischen dem Lagerwellenabschnitt 7 und der Lagerbohrung 6. Die Lagerbohrung 6 ist zylinderförmig ausgebildet, wohingegen der Lagerwellenabschnitt 7 einen balligen Abschnitt umfasst, welcher zur Lagerbohrung 6 eine konvexe Wölbung aufweist. Der Durchmesser der Antriebswelle 3 ist kleiner als der Durchmesser der Lagerbohrung 6. Der ballige Bereich, der den Lagerwellenabschnitt 7 bildet, erstreckt sich vom Lagerrand 9a bis zum Lagerrand 9b. Die Lagerränder 9a und 9b sind mit einer strichpunktierten Linie angedeutet, wobei sich zentrisch zwischen den Lagerrändern 9a und 9b die Lagermitte 8 befindet, welche ebenfalls mit einer strichpunktierten Linie angedeutet ist.

Der Bereich der Gleitlageranordnung 4a, in dem die Lagerluft X den geringsten Wert X1 aufweist, ist mit 26 bezeichnet. Der Lagerwellenabschnitt 7 ist so ausgebildet, dass der Bereich 26 mit der geringsten Lagerluft X1 nicht in der Lagermitte 8 sondern in Richtung der Drehachse 5 der Antriebswelle 3 bezüglich der Lagermitte 8 vom Antriebsbereich 24 der Antriebswelle 3 weg versetzt angeordnet ist. Der Bereich 26 mit der geringsten Lagerluft X1 ist somit von dem zum Antriebsbereich 24 der Antriebswelle 3 weisenden Lagerrand 9a weiter entfernt als von dem dem Antriebsbereich 24 abgewandten Lagerrand 9b. Die konvexe Wölbung des Lagerwellenabschnitts 7 kann aus Abschnitten von Kreisbögen mit verschiedenen Radien, aus Abschnitten einer oder verschiedener Ellipsen, aus Abschnitten einer oder verschiedener Parabeln gebildet sein. Alternativ kann die konvexe Wölbung des Lagerwellenabschnitts 7 auch durch eine numerisch ermittelte Freiformlinie gebildet sein.

Die Drehachse der Antriebswelle 3 ist durch die Antriebswellenachse 5 angedeutet, welche in ihrer Flucht mit der Flucht der Lagerbohrung 6 gemäß der Darstellung in Figur 1 übereinstimmt. Weicht nun die Flucht der Antriebswellenachse 5 von der Flucht der Lagerbohrung 6 ab, so wandert der tragende Bereich des ballig ausgebildeten Lagerwellenabschnittes 7 von der Lagermitte 8 weg und nähert sich einem Lagerrand 9a oder 9b an. Mittels der erfindungsgemäßen Ausgestaltung der Gleitlageranordnung 4 werden große Pressungen zwischen der Lagerbohrung 6 und dem Lagerwellenabschnitt 7 vermieden, so dass ein Verschleiß der Gleitlageranordnung 4 minimal ist.

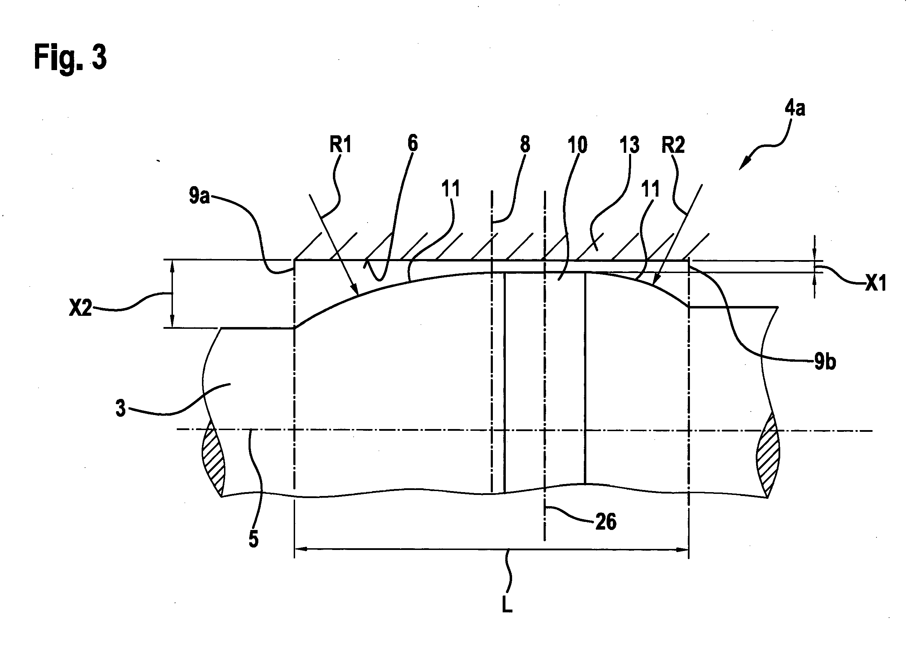

Figur 3 zeigt ein zweites Ausführungsbeispiel der geometrischen Ausgestaltung der Gleitlageranordnung 4a. Der Lagerwellenabschnitt 7 der Antriebswelle 3 unterteilt sich in einen zylindrischen Abschnitt 10, an den sich linksseitig und rechtsseitig jeweils ein balliger Abschnitt 11 anschließt und in die Antriebswelle 3 übergeht. Der zylindrische Abschnitt 10 weist einen größeren Durchmesser auf als die Antriebswelle 3, wobei durch den jeweils angrenzenden balligen Abschnitt 11 der Übergang vom größeren Durchmesser des zylindrischen Abschnittes 10 zum kleineren Durchmesser der Antriebswelle 3 geschaffen wird. Die Radien der balligen Abschnitte 11 sind mit einem Pfeil und einem R1 bzw. R2 angedeutet. Somit ist eine Kantenbildung zwischen dem zylindrischen Abschnitt 10 und dem jeweiligen balligen Abschnitt 11 vermeidbar, da der zylindrische Abschnitt 10 direkt in den balligen Abschnitt übergeht. Der Bereich 26 mit der geringsten Lagerluft X1 ist zwischen dem zylindrischen Abschnitt 10 und der Lagerbohrung 6 gebildet und der zylindrische Abschnitt 10 ist in Richtung der Drehachse 5 der Antriebswelle 3 bezüglich der Lagermitte 8 vom Antriebsbereich 24 der Antriebswelle 3 versetzt angeordnet. Der zum Antriebsbereich 24 hin an den zylindrischen Abschnitt 10 anschließende ballige Abschnitt 11 weist eine größere Erstreckung in axialer Richtung und einen größeren Radius R1 auf als der auf der gegenüberliegende Seite an den zylindrischen Abschnitt 10 anschließende ballige Abschnitt 11, dessen Radius mit R2 bezeichnet ist. Die Krümmung der balligen Abschnitte 11 kann anstelle eines kreisbogenförmigen Verlaufs auch einen zumindest annähernd elliptischen, parabelförmigen oder beliebig anders ausgebildeten Verlauf aufweisen.

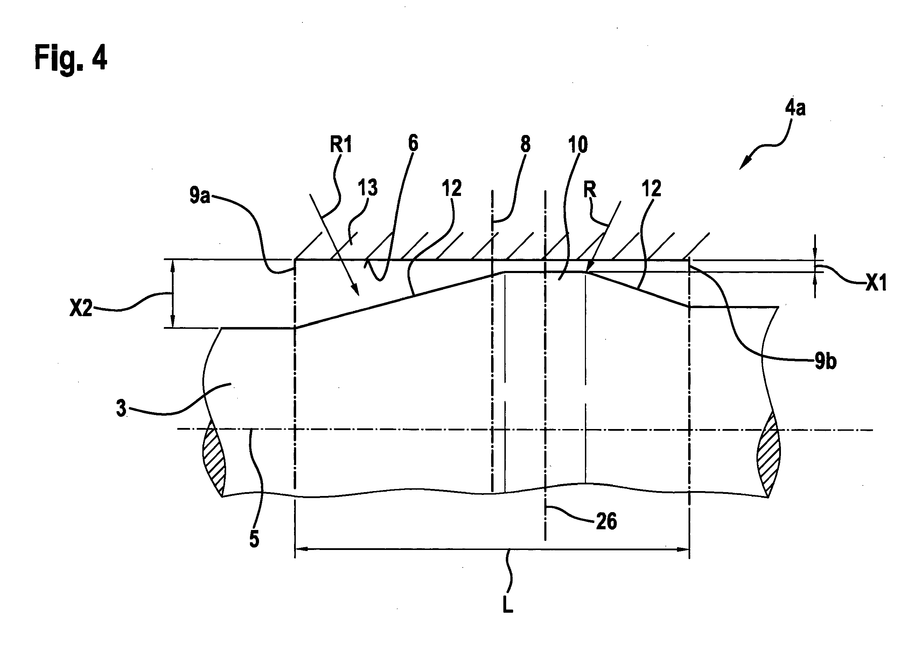

In Figur 4 ist ein drittes Ausführungsbeispiel einer Gleitlageranordnung 4a gezeigt, wobei der Lagerwellenabschnitt 7 wiederum durch einen zylindrischen Abschnitt 10 aufweist, an den sowohl linksseitig als auch rechtsseitig ein konischer Abschnitt 12 angrenzt. Der zylindrische Abschnitt 10 weist auch gemäß dieses Ausführungsbeispiels einen größeren Durchmesser auf als die Antriebswelle 3, wobei die Übergänge durch die jeweiligen konischen Abschnitte 12 gebildet sind. Um die sich zwischen dem zylindrischen Abschnitt 10 und den konischen Abschnitten 12 bildende Kante zu minimieren, können diese durch einen Übergangsradius R geglättet werden. Der Bereich 26 mit der geringsten Lagerluft X1 ist zwischen dem zylindrischen Abschnitt 10 und der Lagerbohrung 6 gebildet und der zylindrische Abschnitt 10 ist in Richtung der Drehachse 5 der Antriebswelle 3 bezüglich der Lagermitte 8 vom Antriebsbereich 24 der Antriebswelle 3 versetzt angeordnet. Der zum Antriebsbereich 24 hin an den zylindrischen Abschnitt 10 anschließende konische Abschnitt 12 weist eine größere Erstreckung in axialer Richtung auf als der auf der gegenüberliegende Seite an den zylindrischen Abschnitt 10 anschließende konische Abschnitt 12. Der Konuswinkel des zum Antriebsbereich 24 hin an den zylindrischen Abschnitt 10 anschließenden Abschnitts 12 kann kleiner sein als der Konuswinkel des anderen Abschnitts 12.

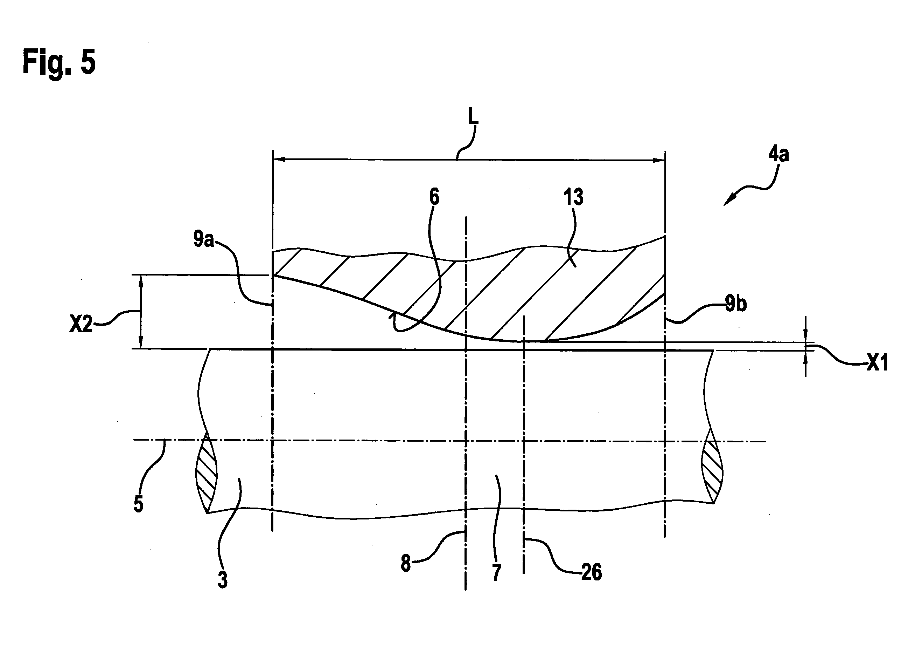

In Figur 5 ist ein viertes Ausführungsbeispiel der Gleitlageranordnung 4a dargestellt, bei dem die Antriebswelle 3 einen zylinderförmigen Lagerwellenabschnitt 7 mit konstantem Durchmesser aufweist. Die ballige Kontur zur Erzeugung der variablen Lagerluft X, die zwischen den Lagerrändern 9a,9b kleiner ist als am jeweiligen Lagerrand 9a und 9b, ist erreicht, indem die Lagerbuchse 13 eine ballige Lagerbohrung 6 aufweist. Die Lagerbohrung 6 weist im Bereich der Lagerränder 9a und 9b einen größeren Durchmesser auf als im Bereich der Lagermitte 8. Der Bereich 26 mit der geringsten Lagerluft X1 ist nicht in der Lagermitte 8 angeordnet sondern in axialer Richtung bezüglich der Lagermitte 8 vom Antriebsbereich 24 der Antriebswelle 3 wegversetzt. Die konvexe Wölbung der Lagerbohrung 6 zum Lagerwellenabschnitt 7 hin kann dabei wie beim ersten Ausführungsbeispiel aus Abschnitten von Kreisbögen mit verschiedenen Radien, aus Abschnitten einer oder verschiedener Ellipsen, aus Abschnitten einer oder verschiedener Parabeln gebildet sein. Alternativ kann die konvexe Wölbung der Lagerbohrung 6 auch durch eine numerisch ermittelte Freiformlinie gebildet sein. Die Gleitlageranordnung 4a gemäß dem vierten Ausführungsbeispiel ist somit eine gespiegelte Anordnung des ersten Ausführungsbeispiels indem die ballige Ausbildung anstelle am Lagerwellenabschnitt 7 in der Lagerbohrung 6 vorgesehen ist. Entsprechend können auch die balligen Ausbildungen gemäß dem zweiten und dritten Ausführungsbeispiel anstelle am Lagerwellenabschnitt 7 in der Lagerbohrung 6 vorgesehen sein.

Die maximale Lagerluft ist mit X2 bezeichnet und diese ist an dem dem Antriebsbereich 24 der Antriebswelle 3 zugewandten Lagerrand 9a vorhanden. Die maximale Lagerluft X2 beträgt vorzugsweise etwa 1 bis 80 µm, wobei dies ein radiales Spiel zwischen dem Lagerwellenabschnitt 7 und der Lagerbohrung 6 von etwa 2 bis 150 µm bedeutet. Die Differenz zwischen der maximalen Lagerluft X2 und der minimalen Lagerluft X1 beträgt beispielsweise etwa 1 bis 80 µm, vorzugsweise etwa 5 bis 30 µm. Dies entspricht einer Differenz der Durchmesser der Lagerbohrung 8 und des Lagerwellenabschnitts 7 von etwa 2 bis 150 µm, vorzugsweise etwa 10 bis 50 µm. Die minimale Lagerluft X1 beträgt beispielsweise etwa 1 bis 80 µm, insbesondere etwa 5 bis 30 µm und vorzugsweise etwa 15 bis 20 µm. Dies entspricht einem minimalen radialen Spiel von etwa 2 bis 150 µm, insbesondere etwa 10 bis 50 µm und vorzugsweise etwa 30 bis 40 µm. Der Bereich 26 der geringsten Lagerluft X1 ist bezüglich der Lagermitte 8 in Richtung der Drehachse 5 der Antriebswelle 3 vorzugsweise um etwa 2 bis 25 % der Länge L der Gleitlageranordnung, vorzugsweise um etwa 10 bis 20 % der Länge L versetzt angeordnet.

## Patentansprüche

1. Pumpe (1), insbesondere Kraftstoffhochdruckpumpe für eine Kraftstoffeinspritzeinrichtung einer Brennkraftmaschine, mit einem Gehäuse (2) und einer in diesem aufgenommenen Antriebswelle (3) durch die wenigstens ein Pumpenkolben (18) zumindest mittelbar angetrieben wird, wobei die Antriebswelle (3) über wenigstens eine Gleitlageranordnung (4a,4b) drehbar um eine Antriebswellenachse (5) gelagert ist und einen Antriebsbereich (24) aufweist, über den die Antriebswelle (3) angetrieben wird, wobei die Gleitlageranordnung (4a,4b) eine Lagerbohrung (6) und einen sich durch diese hindurch erstreckenden Lagerwellenabschnitt (7) aufweist, wobei die Gleitlageranordnung (4a,4b) eine sich in radialer Richtung bezüglich der Drehachse (5) der Antriebswelle (3) zwischen der Lagerbohrung (6) und dem Lagerwellenabschnitt (7) erstreckende Lagerluft (X) aufweist, welche in einem zwischen den axialen Lagerrändern (9a,9b) liegenden Zwischenbereich (26) einen kleineren Wert aufweist als an den Lagerrändern (9a,9b), **dadurch gekennzeichnet, dass** der Zwischenbereich (26) mit dem kleinsten Wert (X1) der Lagerluft (X) bezüglich der Lagermitte (8) der Gleitlageranordnung (4a,4b) vom Antriebsbereich (24) der Antriebswelle (3) wegversetzt angeordnet ist.

2. Pumpe (1) nach Anspruch 1,
**dadurch gekennzeichnet, dass** die maximale Lagerluft (X2) an dem dem Antriebsbereich (24) der Antriebswelle (3) zugewandten Lagerrand (9a) ausgebildet ist.

3. Pumpe (1) nach Anspruch 2,
**dadurch gekennzeichnet, dass** die Differenz zwischen der maximalen Lagerluft (X2) und der minimalen Lagerluft (X1) etwa 1 bis 80 µm, vorzugsweise etwa 5 bis 30 µm beträgt.

4. Pumpe (1) nach einem der Ansprüche 1 bis 3,
**dadurch gekennzeichnet, dass** die minimale Lagerluft (X1) etwa 1 bis 80 µm, insbesondere etwa 5 bis 30 µm, vorzugsweise etwa 15 bis 20 µm beträgt.

5. Pumpe (1) nach einem der vorgenannten Ansprüche,
**dadurch gekennzeichnet, dass** der Zwischenbereich (26) mit der geringsten Lagerluft (X1) in Richtung der Drehachse (5) der Antriebswelle (3) um etwa 2 bis 25 %, vorzugsweise etwa 10 bis 20 % der Länge (L) der Gleitlageranordnung (4a,4b) bezüglich der Lagermitte (8) versetzt angeordnet ist.

## Claims

1. Pump (1), in particular high-pressure fuel pump for a fuel injection system of an internal combustion engine, with a housing (2) and a driveshaft (3) which is accommodated in the latter and by which at least one pump piston (18) is driven at least indirectly, the driveshaft (3) being mounted rotatably about a driveshaft axis (5) via at least one plain bearing arrangement (4a, 4b) and having a drive region (24), via which the driveshaft (3) is driven, the plain bearing arrangement (4a, 4b) having a bearing bore (6) and a bearing-shaft portion (7) extending through the latter, the plain bearing arrangement (4a, 4b) having a bearing clearance (X) which extends in the radial direction with respect to the axis of rotation (5) of the driveshaft (3) between the bearing bore (6) and the bearing-shaft portion (7) and which has a lower value in an intermediate region (26) lying between the axial bearing margins (9a, 9b) than at the bearing margins (9a, 9b), **characterized in that** the intermediate region (26) having the lowest value (X1) of the bearing clearance (X) is arranged so as to be offset away from the drive region (24) of the driveshaft (3) with respect to the bearing centre (8) of the plain bearing arrangement (4a, 4b).

2. Pump (1) according to Claim 1, **characterized in that** the maximum bearing clearance (X2) is formed at the bearing margin (9a) which faces the drive region (24) of the driveshaft (3).

3. Pump (1) according to Claim 2, **characterized in that** the difference between the maximum bearing clearance (X2) and the minimum bearing clearance (X1) is about 1 to 80 µm, preferably about 5 to 30 µm.

4. Pump (1) according to one of Claims 1 to 3, **characterized in that** the minimum bearing clearance (X1) is about 1 to 80 µm, in particular about 5 to 30 µm, preferably about 15 to 20 µm.

5. Pump (1) according to one of the abovementioned claims, **characterized in that** the intermediate region (26) having the smallest bearing clearance (X1) is arranged, in the direction of the axis of rotation (5) of the driveshaft (3), so as to be offset by about 2 to 25%, preferably about 10 to 20%, of the length (L) of the plain bearing arrangement (4a, 4b) with respect to the bearing centre (8).

## Revendications

1. Pompe (1), en particulier pompe de carburant haute pression pour un dispositif d'injection de carburant d'un moteur à combustion interne, comprenant un boîtier (2) et un arbre d'entraînement (3) reçu dans celui-ci, lequel entraîne au moins indirectement au moins un piston de pompe (18), l'arbre d'entraînement (3) étant monté à rotation autour d'un axe d'arbre d'entraînement (5) par le biais d'au moins un agencement de palier lisse (4a, 4b) et présentant une région d'entraînement (24) par le biais de laquelle l'arbre d'entraînement (3) est entraîné, l'agencement de palier lisse (4a, 4b) présentant un alésage de palier (6) et une portion d'arbre de palier (7) s'étendant à travers celui-ci, l'agencement de palier lisse (4a, 4b) présentant un jeu de palier (X) s'étendant dans la direction radiale par rapport à l'axe de rotation (5) de l'arbre d'entraînement (3) entre l'alésage de palier (6) et la portion d'arbre de palier (7), lequel jeu de palier présente, dans une région intermédiaire (26) située entre les bords de palier axiaux (9a, 9b), une plus petite valeur qu'au niveau des bords de palier (9a, 9b), **caractérisée en ce que** la région intermédiaire (26) ayant la plus petite valeur (X1) du jeu de palier (X) est disposée de manière décalée par rapport au centre du palier (8) de l'agencement de palier lisse (4a, 4b) à l'écart de la région d'entraînement (24) de l'arbre d'entraînement (3).

2. Pompe (1) selon la revendication 1,
**caractérisée en ce que** le jeu de palier maximum (X2) est réalisé au niveau du bord de palier (9a) tourné vers la région d'entraînement (24) de l'arbre d'entraînement (3).

3. Pompe (1) selon la revendication 2,
**caractérisée en ce que** la différence entre le jeu de palier maximum (X2) et le jeu de palier minimum (X1) vaut environ 1 à 80 µm, de préférence environ 5 à 30 µm.

4. Pompe (1) selon l'une quelconque des revendications 1 à 3,
**caractérisée en ce que** le jeu de palier minimum (X1) vaut environ 1 à 80 µm, en particulier environ 5 à 30 µm, de préférence environ 15 à 20 µm.

5. Pompe (1) selon l'une quelconque des revendications précédentes,
**caractérisée en ce que** la région intermédiaire (26) ayant le plus petit jeu de palier (X1) est disposée dans la direction de l'axe de rotation (5) de l'arbre d'entraînement (3) de manière décalée d'environ 2 à 25 %, de préférence d'environ 10 à 20 % de la longueur (L) de l'agencement de palier lisse (4a, 4b) par rapport au centre du palier (8).
